# EUROPEAN PATENT APPLICATION

(11) **EP 4 512 663 A1**
(43) Date of publication of application: **26.02.2025**
(21) Application number: 23193498.5
(22) Date of filing: 25.08.2023
(51) Int. Cl.: B60P 3/40, F03D 13/40

(54) **TRANSPORT VEHICLE FOR TRANSPORTING A WIND TURBINE ROTOR BLADE, TRANSPORT SYSTEM AND METHOD**

(71) Applicant: Nordex Energy SE & Co. KG, 22419 Hamburg (DE)
(72) Inventor: Malischewski, Mathias, 22419 Hamburg (DE); Braasch, Hauke, 22419 Hamburg (DE)
(74) Representative: Epping - Hermann - Fischer

(57) **Abstract**

The invention concerns a transport vehicle (116) for transporting a wind turbine rotor blade (110), comprising
- a tractor (118), in particular equipped with a driver's cab (122),
- a trailer (120) coupled with the tractor (118),
- a blade lifting device (124), which is mounted on the trailer (120) and which is configured to be mechanically connected to a root end (126) of the wind turbine rotor blade (110), wherein the blade lifting device (124) is configured to lift the wind turbine rotor blade (110) in a connected state from a lying transport position into an at least partially erected transport position.

The invention also concerns a transport system (114) and a method.

## Description

The present disclosure relates to a transport vehicle for transporting a wind turbine rotor blade. Furthermore, the present disclosure relates to a transport system and a method.

Wind turbines are widely known and are used to convert wind energy into electric energy. The lengths of the rotor blades used in such wind turbines have increased in recent years. Usually, as a transport system a truck with an adapter fixed to the rotor blade at its root end and a dolly close to blade tip are used. Typically, a maximum blade length for this type of transport system is seen at around 90m for typical scenarios in Europe. Transportation problems often arise at curves of some necessary transportation roads and in particular the curve exits of highways. Further, close to the installation site of a wind turbine, roads are often very narrow and villages needs to be passed with very tight curves.

Accordingly, the transport of these rotor blades and the assembly of the corresponding wind turbines is a challenge.

One object to be achieved is to provide a transport vehicle for transporting a rotor blade that helps facilitate road transport of long length rotor blades. Further objects to be achieved are to provide a transport system and a corresponding method.

According to a first aspect a transport vehicle for transporting a wind turbine rotor blade (short: rotor blade or blade) is disclosed. The transport vehicle comprises a tractor, in particular equipped with a driver's cab. Further, the transport vehicle comprises a trailer coupled with the tractor. Further, the transport vehicle comprises a blade lifting device, which is mounted on the trailer and which is configured to be mechanically connected to a root end of the wind turbine rotor blade. The blade lifting device is configured to lift the wind turbine rotor blade in a connected state from a lying transport position into an at least partially erected transport position.

The disclosed transport vehicle refers to a tractor and a coupled trailer, wherein the trailer is equipped with the blade lifting device. Thus, the lifting device is not only used at an installation site of a wind turbine, but already during the whole transport, i.e. at start of an onshore transport. The described transport vehicle thus allows to transport very long rotor blades, e.g. with a length of 90 m to 100 m or even more, since with the blade lifting device, obstacles can be avoided by bringing the typically laying rotor blade in an at least partially erected transport position. The transport vehicle allows for a comparatively fast transport onshore, e.g. highways, other fast roads and through villages. Thus, a highly maneuverable and at the same time fast transport vehicle is disclosed.

Further cost savings can be achieved in reducing the need for split blades and risk mitigations for such blades. Furthermore, the transport vehicle can also be used to erect the rotor blade at the installation site. Thus, an additional transport system, e.g. a self-propelled modular transporter (short: SPMT) is not needed anymore at the installation site. A SPMT is a strong, very agile, but very slow vehicle with their own drive(s), typically with a maximum speed of 5 to 20 km/h. Such SPMT is used only at the "last mile" of transportation. For using a SPMT, the rotor blade would need to be lifted with at least one crane from the transport vehicle, in particular the long-distance transport vehicle, to the SPMT and mounted thereon. Such operation would take several hours of time and is a handling risk to the rotor blade. Thus, the inventive transport vehicle saves time (no transfer of the blade to the other transport system) and costs (no SPMT needed, no crane for transferring the blade between two transport systems).

The described transport vehicle further provides the ability to pass below bridges with heights of 4.5 m or 4.3 m, for example.

The described transport vehicle can be used for transporting the blade preferably to the installation site, but also to an intermediate storage place. The distance between the storage site and the construction (installation) site may be more than 1 km, for example.

The rotor blade can be transported to the construction site while the rotor blade is essentially kept in the lying transport position and is only erected, at least partially to pass obstacles, as will be described herein.

The transport vehicle comprises components which support and secure the rotor blade in the assembly position.

The tractor comprises a drive system, e.g. a combustion engine, and comprises a driver's cab. Thus, the tractor is driven by a person, contrary to a SPMT. The tractor and the trailer can also be named as truck.

The trailer is configured to support the blade lifting device and thus the rotor blade. In other words, the trailer comprises a platform, on which the blade lifting device is mounted. The trailer, for example, has one or more axles with wheels. The trailer is pivotally connected to the tractor.

The blade lifting device is, for example, an adapter device, which is mounted on the trailer. Thus, a fixed, stable connection to the trailer is established. The blade lifting device has a mounting region, e.g. a mounting plate or a flange, for connecting the rotor blade thereto. Typically, the rotor blade is screwed to the blade lifting device via a plurality of connecting bolts. The blade lifting device can be driven, e.g. by a hydraulic system, to lift a connected blade. The blade lifting device can additionally, in an embodiment, be configured to be rotated along a vertical axis (Z-axis) in order to rotate the connected rotor blade.

The terms "up", "upwards", "down" and "downwards" are herein used with respect to the direction of gravity. Particularly, "up" and "upwards" are directions away from the ground or from the road and "down" or "downwards" are directions facing the ground or the road, respectively. The terms "back", "rear", "left" and "right" are used with respect to a typical driving direction of the transport vehicle.

According to an embodiment, the transport vehicle comprises a dolly with a tip support structure. The tip support structure is configured to support the wind turbine rotor blade in a tip region thereof, typically at some distance to the tip end of the blade, e.g. in the last third of length of the rotor blade. The tip support structure is coupled to the dolly. Tip support structure may comprise a clamping device for holding the wind turbine rotor blade. The tip support structure can be an independent part that can be coupled and decoupled from the dolly.

The dolly is a trailing vehicle. The dolly is pulled by the tractor indirectly via the load to be transported, e.g. the wind turbine rotor blade. The dolly has no own drive unit. In other words, the dolly is a simply rolling vehicle. The dolly typically has only rigid axles.

Alternatively, the dolly has its own drive. This allows the dolly to be moved easily to a different position, e.g. after being disconnected from the rotor blade. For example, no crane is needed to move the dolly from one place to another.

According to an embodiment, the blade lifting device is configured and mounted onto the trailer such that - with a wind turbine rotor blade in the connected state - a height of 4.5 m, preferably 4.3 m, is not exceeded. In other words, the trailer and the blade lifting device are arranged such that maximum height of 4.5 m, or preferably 4.3 m, is not exceeded. Thus, with such a clearance height not to be exceeded, passing under bridges under European road conditions and requirements is possible. This contributes to the above-mentioned functions and advantages.

According to an embodiment, the trailer is a low-bed trailer, semi low-bed trailer or a boiler bridge trailer. Thus, mounting the blade lifting device on such trailer allows to not exceed the above-mentioned maximum heights. Preferably a so-called boiler bridge trailer (German: "Kesselbrücke") is used. The boiler bridge trailer is a heavy trailer, who typically comprises two parallel arranged beams (bars, spars) of its chassis, the beams being arranged between the rear axle(s) and, if provided, the front axle(s) or the tractor. Between the two beams there is a free space, which allows the wind turbine rotor blade, due to its round or curved contour with a big diameter, to be arranged in the free space to get as close as possible to the road, in order to bypass height restrictions of (e.g. 4.3 m at a bridge).

Here and in the following applies that an axle, e.g. the rear or front axle, comprises wheels, typically two wheels.

According to an embodiment, the trailer comprises at least one rear axle and a deck located between the at least one rear axle and the blade lifting device, wherein a minimum length of the deck is 8 m, preferably 10 m. This minimum deck length ensures that a transported wind turbine rotor blade, i.e. in the laying transport position, is slim enough in the region over the rear axle of the trailer to not exceed a total predetermined height, e.g. the above-mentioned 4.5 m or 4.3 m, since the trailer itself may have a larger height at the rear axle, e.g. 1 m, than in the deck region. Thus, the wind turbine rotor blade can be attached to the blade lifting device and be supported on the trailer without exceeding a predetermined height, e.g. the above-mentioned 4.5 m or 4.3 m.

According to an embodiment, wherein the trailer comprises at least one front axle. E.g. the boiler bridge trailer may have at least one front axle. This provides additional support to transport the heavy loads of a wind turbine rotor blade, in particular for a very erected position in which the center of gravity is shifted towards the tractor.

It is noted here that the trailer may have several front axles with wheels and/or several rear axles with wheels.

According to an embodiment, the trailer comprises two elongated spars (or beams) between which a free space is formed into which the wind turbine rotor blade projects at least partially in the connected state. This contributes to the above-mentioned functions and advantages. In the free space, a portion of the transported rotor blade is directly facing the ground, i.e. there are no further components or parts of the trailer between the ground, e.g. the road, and the rotor blade.

According to an embodiment, the transport vehicle comprises an exchangeable mounting adapter, the mounting adapter being connected to the blade lifting device, wherein the mounting adapter is adapted to be connected to a rotor blade having a larger or smaller diameter than a rotor blade mounted directly to the blade lifting device. This makes it possible to transport wind turbine rotor blades with different sizes with the one transport vehicle in a simple manner, since the adaptation of the transport vehicle to a rotor blade to be transported only is merely exchanging the mounting adapter. Such exchange is easy and therefore comparatively inexpensive.

According to an embodiment, the transport vehicle comprises at least one of the following:
- side support wheels that are detachably mounted to the trailer;
- a heavy-duty module that is coupled to a rear side of the trailer, the heavy-duty module being configured to be detached from the rear side and to be mounted to a lateral side of the trailer in order to provide lateral support;
- one or more fold-out support wheels being mounted on the trailer in such a way that the one or more fold-out support wheels can be unfolded from a storage position (folded position) on the trailer and brought into a support position (unfolded position) to a lateral side of the trailer; and/or
- a ballast slidingly mounted on the trailer such that the ballast can be moved between two lateral sides of the trailer.

Thus, the transport vehicle is equipped with one or more stabilizing means, in particular, especially to prevent the vehicle and trailer from tilting sideways. Such tilting can happen due to the heavy loads of the connected rotor blade or acting on the rotor blade, such as wind loads, in particularly in the at least partially erected position. Furthermore, the transport vehicle can have a slight slanting position. The stabilizing means, which will be described in more detail below, can be provided only on one lateral side depending on the loads. Thus a quasi-asymmetrical structure is provided for compensating such critical loads.

The side support wheels, for example, are stored on the trailer, in particular without contact to the ground (storage state). If they are needed, they are mounted on trailer to have contact to the ground (support state). For example, the side support wheels are screwed to the trailer for the storage state and for the support state. For example, the side support wheels are mounted on the trailer as cassettes, e.g. about 1 m width. For example, to one or more adapters that are provided on the trailer to mount and/or store the side support wheels. For example, the side support wheels are mounted to the trailer for the support state in the region of the deck of the trailer and/or the above-described spars.

A heavy-duty module is a kind of a dolly as described above, which is coupled to the trailer at is end. The heavy-duty module has no own drive. The heavy-duty module is capable of supporting high loads, e.g. several tons. The heavy-duty module has, for example, a width of 2.5 m. The heavy-duty module is, if needed, mounted to a lateral side of the trailer to support it as described above with respect to the side support wheels.

The fold-out support wheels are similar to the above side support wheels; however, the support wheels do not need to be dismounted and mounted between a storage and a support state. They are mounted on the trailer such that they can be released from the storage position and being moved, e.g. via one or more hinges and support arms, into the support position.

The ballast is a kind of counterweight which can be slidingly moved along a lateral direction on the trailer between a left side and a right side. Thus, depending on the load acting on the transport vehicle and particularly on the trailer, the ballast is shifted to compensate the forces acting.

According to an embodiment, the trailer comprises a sensor device, the sensor device being configured to measure a pressure at an edge of the trailer. By means of the sensor, a conclusion can be drawn as to where the highest forces are acting on the transport vehicle, e.g. the trailer, and where the trailer may require additional support, e.g. via one of the above stabilizing means. The sensor determines an edge pressure (corresponding to a force acting) and may calculate how stable the transport vehicle is, in order to know where a stabilizing means must be provided and/or whether the rotor blade must be lowered.

According to further aspect, a transport system is disclosed, which comprises a transport vehicle according to an embodiment of the first aspect and a wind turbine rotor blade. The wind turbine rotor blade is supported by the transport vehicle. The transport system essentially enables the above-mentioned functions and advantages. The above-described embodiments similarly apply.

According to further aspects, a use of the transport vehicle and a use the transport system are disclosed. The transport vehicle and the transport system are used for transporting a wind turbine rotor blade as described above. In particular, they are used for transporting a rotor blade from one location to another location with the rotor blade being mainly in the lying transport position, besides at least partially erecting the blade with the blade lifting device as described above. Particularly, they are used for a road transport. For example, the transport system is first used to transport a rotor blade from a starting site to a storage site and is then used to transport the rotor blade from the storage site to the construction site of the wind turbine.

The uses of the transport vehicle and the transport system essentially enable the above-mentioned functions and advantages. The above-described embodiments similarly apply.

According to a further aspect, a method for transporting a wind turbine rotor blade for a wind turbine is disclosed. The method comprises the steps:
- providing a transport system according to any of the above embodiments,
- transporting a wind turbine rotor blade being supported on the transport vehicle,
- lifting the blade with the blade lifting device,
- driving a curve.

The described method enables the above-mentioned functions and advantages. In particular, the method allows a transportation of long rotor blades, wherein curves of roads necessary for the transport of the rotor blade can be passed, in particular exits of highways. With the blade lifting device, the rotor blade can be lifted and thus, during road transport, obstacles, e.g. high trees or houses that lie within the radius of the curve, can be easily bypassed. Furthermore, the method allows to leave highway exits, as will be described below.

Subsequent and/or intermediate steps are possible, e.g. lifting down the blade after having driven the curve, detaching or attaching dolly, driving again, etc.

According to an embodiment, prior to the step of lifting, a dolly is detached from the wind turbine rotor blade. Thus, the blade can be lifted. Afterwards, the dolly is attached to the blade again for further road transport. For this case, the dolly may have its own drive, as indicated above, in order that the dolly can easily drive to another position, where the dolly is attached to the blade again at a later step.

According to an embodiment, the method comprises the step of driving backwards prior to the step of driving a curve.

According to an embodiment, prior to the step of lifting, the transport vehicle passes under a bridge, and wherein in the step of driving backwards, the transport vehicle drives backwards until the lifted blade is arranged above the bridge.

As indicated above, the method allows to leave highway exits, where one or more bridges cross the highway. Typically, a distance from the exit of the highways (exit curve) to a bridge over the highway is less than 100 m. This is true, for example, in Germany, where shamrock-like highway exits are very common. The transport system could not stop before the exit and lift the blade, since the underpassed bridge would be hit. The described method however allows to pass such exits, wherein the transport system drives under the bridge and passes the exit at least a little bit. Afterwards the blade is lifted and the transport system drives backwards, wherein the lifted blade at least partially is arranged over the bridge. Then, the curve can be driven. After passing the curve, the blade is lifted down again, the dolly is mounted and the transport on road can continue.

Hereinafter, the transport vehicle, the transport system, the vehicle and the method for transporting a rotor blade will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

In the figures:
Figure 1 shows an exemplary embodiment of a wind turbine,
Figure 2 shows a transport system according to an embodiment of the invention with a rotor blade in a lying transport position,
Figure 3 shows the transport system with the rotor blade in a partially erected transport position,
Figure 4 shows a cross-sectional view of the transport system,
Figures 5 to 9 show transport systems according to further embodiments of the invention,
Figures 10 to 12 show different steps of a method for transporting a rotor blade according to an embodiment of the invention, and
Figure 13 shows a flowchart of the method for transporting a rotor blade.

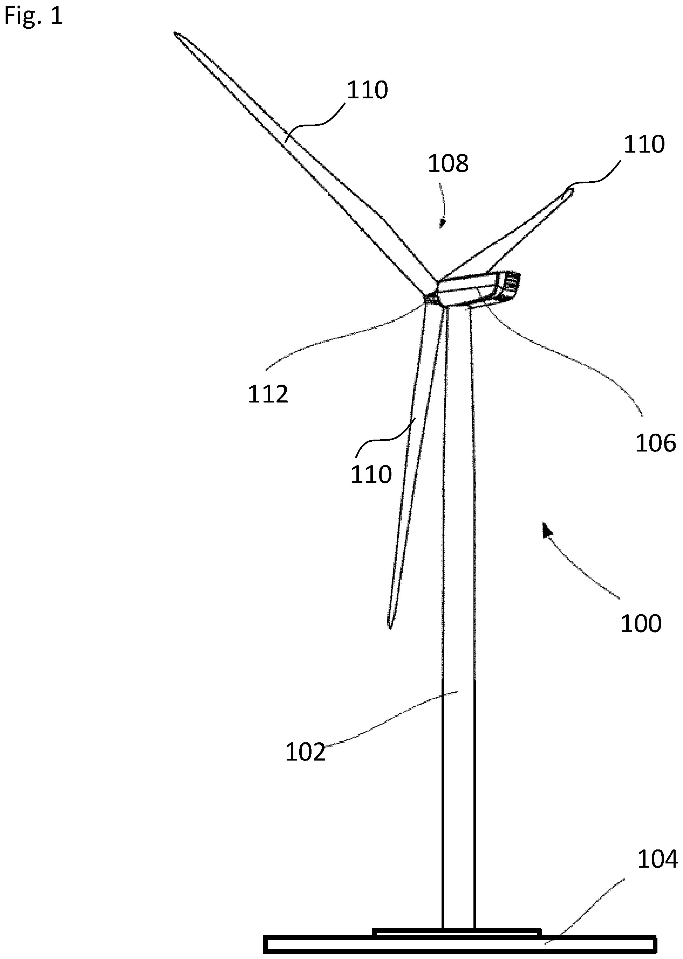

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the kinetic energy of the rotor 108 into electrical energy.

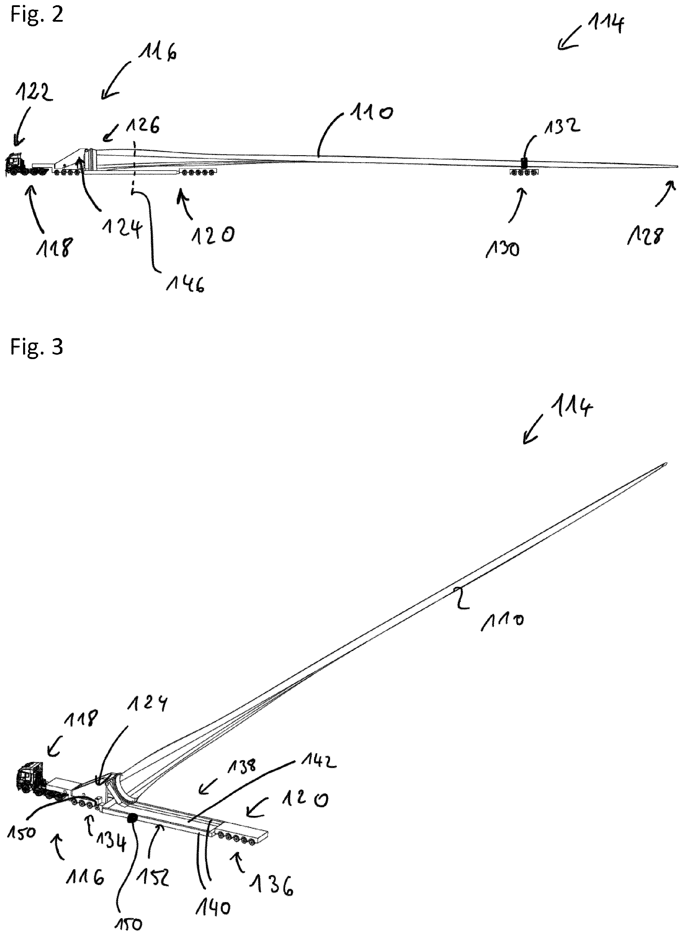

Figure 2 shows a transport system 114. The transport system 114 comprises a transport vehicle 116 and a wind turbine rotor blade 110, which is transported onshore. The transport vehicle 116 has a tractor 118 and a trailer 120 (also named truck comprising the trailer and the tractor), which is a boiler bridge trailer as described above. The tractor 118 has a driver's cab 122 and has its own drive, i.e. a combustion engine or and electronic drive. The trailer 120 is pivotably hinged to the tractor 118.

Onto the trailer 120 a blade lifting device 124 is fixedly attached. The rotor blade 110 is fixedly connected to the blade lifting device 124 with its root end 126 at a mounting plate of the blade lifting device 124. In particular, the blade 110 is screwed to the blade lifting device 124. Thus, the rotor blade 110 is supported at is root end 126 on the transport vehicle 116.

The rotor blade 110 has a tip end 128. In the region of the tip end 128, meaning in the last third of the length of the rotor blade 110, the transport vehicle 116 comprises a dolly 130 to support the rotor blade 110. The dolly 130 comprises a tip support structure 132 for supporting the rotor blade 110.

In figure 2, the rotor blade 110 is supported in a lying transport position. In this position, the transport system 114 is configured to transport the rotor blade 110 onshore on roads like highways from a starting point towards a storage area or towards the installation site in a "fast" way.

As can be seen from figure 3, the blade lifting device 124 is configured to lift up the rotor blade 110 from the lying transport position into at least a partially erected transport position. The blade lifting device 124 comprises suitable means, e.g. a hydraulic drive system, to hold and lift the rotor blade 110. Thus, the transport system 114 is not only capable to transport the blade 110 in the lying transport position, but also to transport the blade 110 in an erected position, e.g. to pass obstacles as described above and will be further detailed below.

The transport system 114 is configured such that - with a wind turbine rotor blade in the connected state and in the lying transport position - a maximum height of 4.5 m, preferably 4.3 m, is not exceeded. This is in particular due to the arrangement of the trailer 120 and the blade lifting device 124, as will be clear from the following.

The trailer 120 comprises several front axles 134 equipped with wheels and several rear axles 136 equipped with wheels. Between the front and rear axles 134, 136 the trailer 120 has a deck 138 comprising two parallel arranged spars 140. The spars 140 are arranged lower than the trailer portions at the rear and front axles 134, 136. In the present example, the term deck means the portion between the front and rear axles 134, 136 and not necessarily means a storage area on which the wind turbine rotor blade 110 is directly laid on. The deck 138, for example, has a length of 10 m. With other trailers, e.g. low-bed trailers, the term deck can mean a storage or load area.

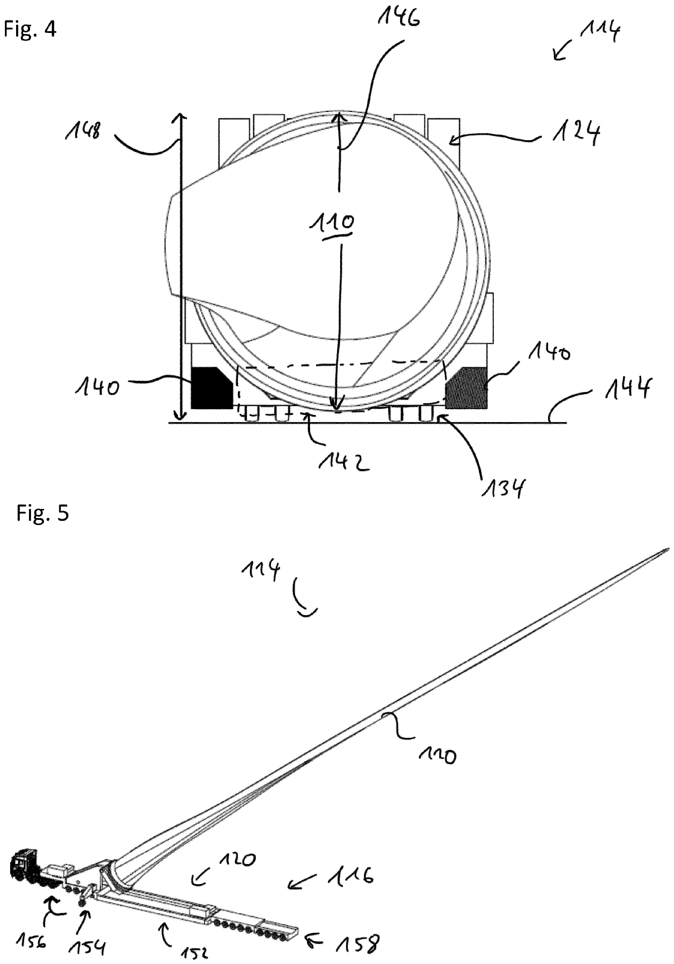

Between the two spars 140 a free space 142 is formed into which the wind turbine rotor blade 110 projects at least partially in the connected state in the lying transport position. This allows to bring the rotor blade 110 very close to the ground 144, as shown in figure 4, which is a cross-sectional view along the cross-section plane 146 in figure 2. This is in particular advantageous with regard to very large diameter 146 in the root region of the blade 110.

Thus, with respect to figure 4, the transport system has an overall height 148 which is lower than an admissible or predetermined height, e.g. 4.3 m.

Optionally, the trailer can comprise one or more stabilizing means as indicated in the above introductory portion of this disclosure.

In an embodiment, the trailer 120 comprises side support wheels 150, as exemplarily shown in figure 3. The side support wheels 150 are detachably mounted on the trailer 120 and are not used for the "normal" transport. The side support wheels 150 can be detached and mounted onto a lateral side 152 of the trailer 120, as indicated in figure 3 with the black circle. Of course, several such wheels can be provided and mounted onto the trailer 120.

In another embodiment, one or more fold-out support wheels 154 being mounted on the trailer 120 in such a way that the one or more fold-out support wheels 154 can be unfolded from a storage position on the trailer 120 (not shown) and brought into a support position (as shown in figure 5) to a lateral side 152 of the trailer 120. The folding out is done, for example, in a horizontal rotation movement, e.g. as indicated by arrow 156. Of course, other or different movements are possible for folding out the fold-out support wheels 154.

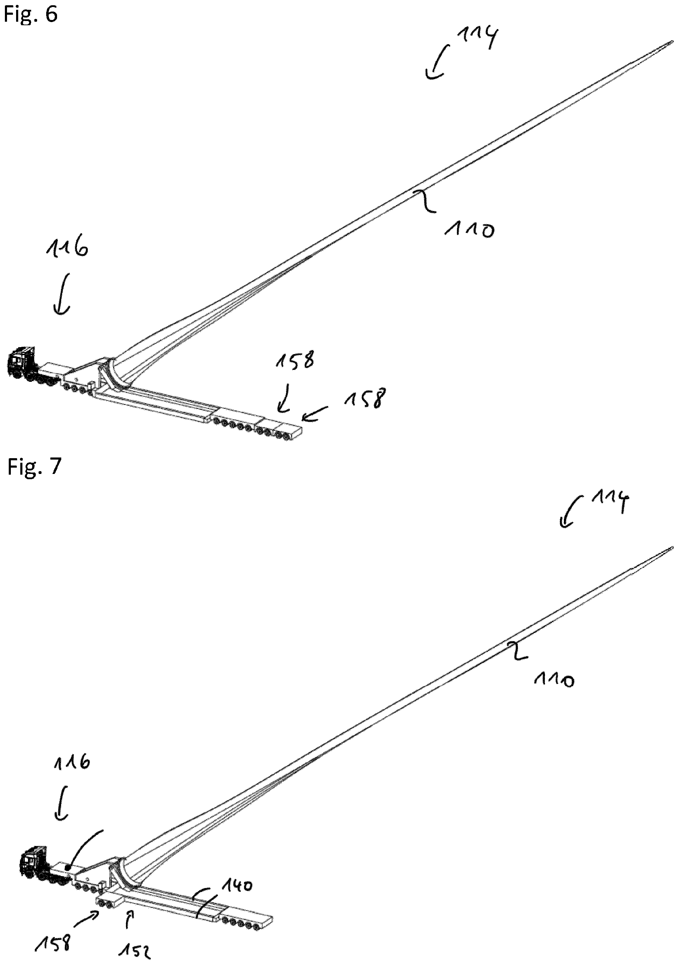

In another embodiment, one or more heavy-duty modules 158 are provided that are coupled to a rear side 160 of the trailer 120, as indicated in figures 5 and 6. A heavy-duty module 158 is configured to be detached from the rear side 160 of the trailer 120 and to be mounted to a lateral side 152 of the trailer 120 in order to provide lateral support as already described. An example is shown in figure 7, where a heavy-duty module 158 is mounted on a spar 140 for side support.

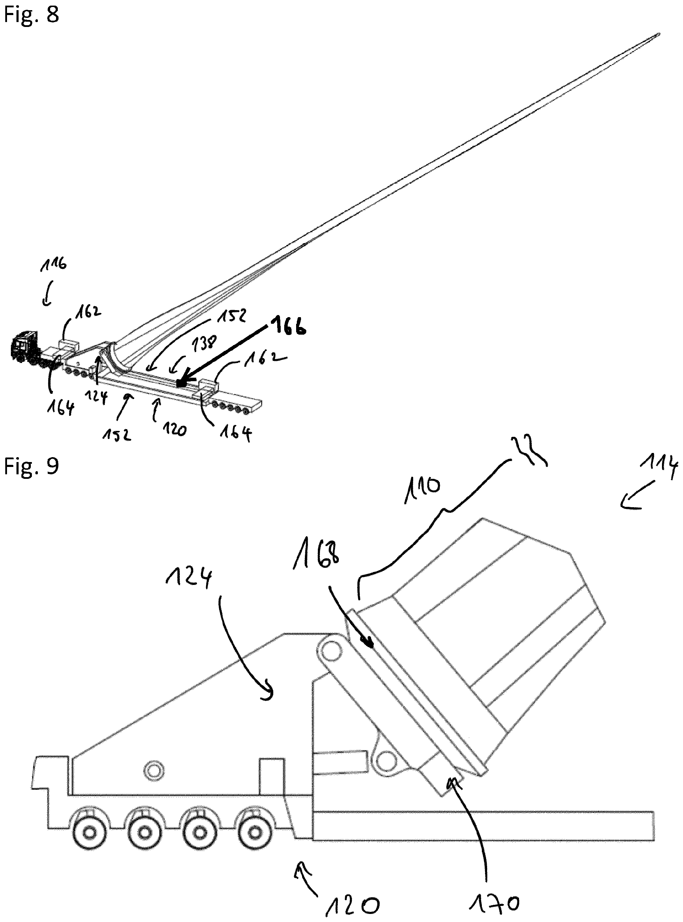

In another embodiment, as shown in figure 8, one or more ballasts 162 are provided. A ballast 162 is a counterweight. The ballasts 162 are mounted slidingly on the trailer, e.g. ahead of the blade lifting device 124 or on the deck 138, e.g. the spars 140. For example, a guiding rail 164 is provided for slidingly supporting a ballast 162. This allows to bring a ballast 162 from one lateral side 152 to the other in order to shift weight to counteract a tendency of the transport system 114 to tilt.

Optionally, the trailer 120 comprises a sensor device 166 (see figure 8 exemplarily), the sensor device 166 being configured to measure a pressure at an edge of the trailer 120, e.g. at a lateral side 154.

Of course, the sensor device 166 can be provided at any of the above-described embodiments. Furthermore, the above-described different stabilizing means can be combined in one transport system 114.

Figure 9 shows a further embodiment, focusing an exchangeable mounting adapter 168. As described above, the blade lifting device 124 has a mounting plate 170 for directly attaching the wind turbine rotor blade 110 thereto. Now, the exchangeable mounting adapter 168 is mounted to the mounting plate 170 and enables blades with different, e.g. larger root diameters, to be connected to the blade lifting device 120, without the need to exchange the whole blade lifting device 120. Rather, just the mounting adapter 168 needs to be exchanged or removed for connection of a differently sized rotor blade 110. For example as shown in the figure 9, the mounting adapter 168 widens conically.

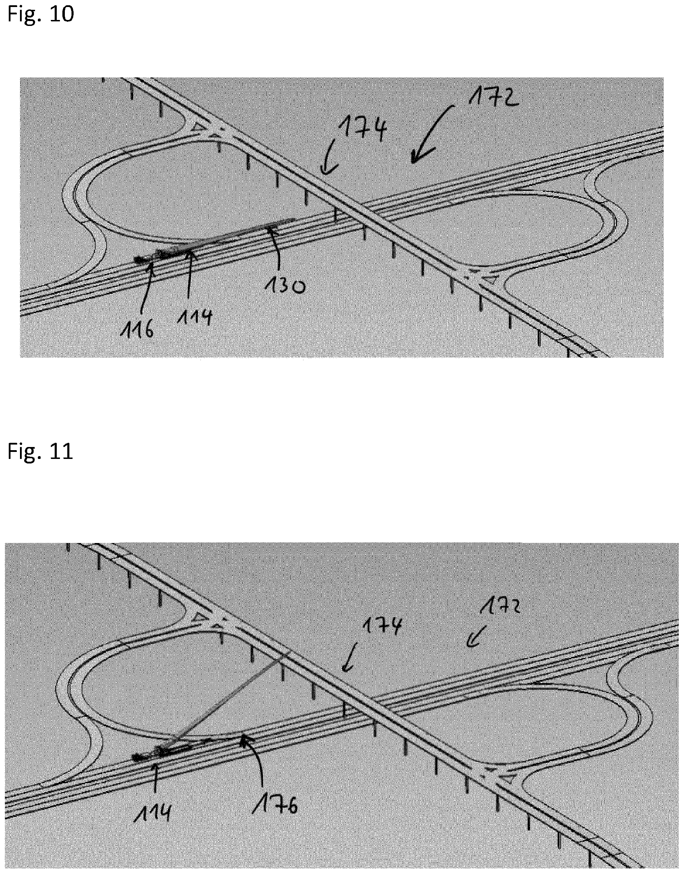

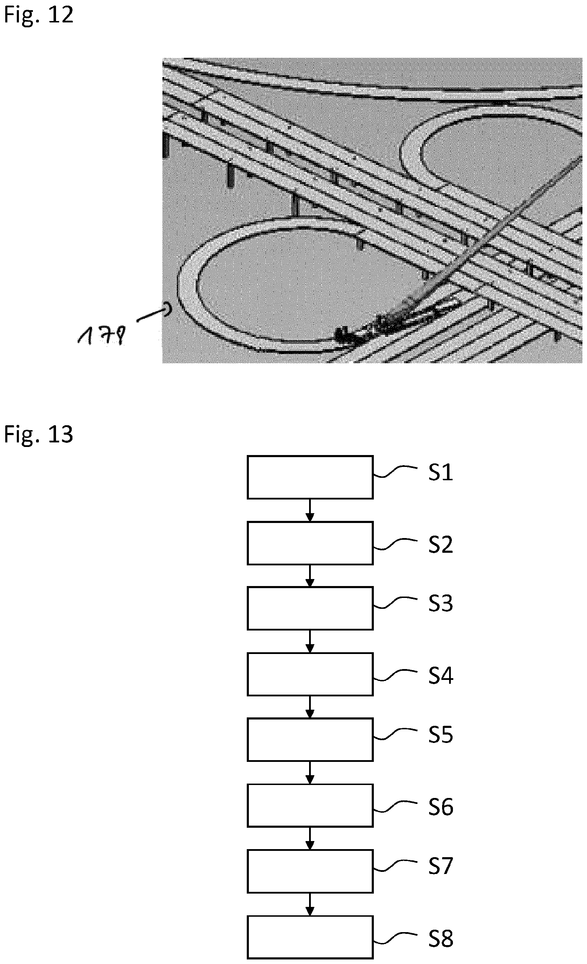

With the above-described embodiments of the transport system 114 and transport vehicle 116, a method of transporting a wind turbine rotor blade 110 for a wind turbine 100 can be performed, as is described along with figures 10 to 13, wherein figure 13 shows a flowchart of the method. The method is described using the example of a highway exit, the highway exit representing an obstacle to be passed.

In a first step S1, a transport system 114 as described above is provided, for example the transport system 114 according to figures 2 and 3.

In a second step S2, the rotor blade 110, being supported on the transport vehicle 116 as described, is transported onshore, e.g. from a starting site (e.g. a harbor). The rotor blade 110 is in the lying transport position as shown in figure 2. For example, the transport system 114 drives on a highway 172 as exemplarily shown in figure 10.

Next, the transport system 114 aims at using a highway exit.

In a next step S3, the transport system 114 passes under a bridge 174 (see figure 10). In particular, the transport system 116 drives a little further straight past the exit 176 of the highway as shown in figure 11. In other words, it passes the exit 176 at least partially.

In a next step S4, the dolly 130 is detached from the rotor blade 110.

In a next step S5, the rotor blade 110 is lifted by the blade lifting device 120 as shown in figure 11. Thus, the blade 110 is in a partially erected transport position.

In a next step S6, the transport vehicle 116 drives backwards until the lifted blade 110 is arranged above the bridge 174 as indicated in figure 12.

In a next step S7, the transport vehicle 116 drives the curve 178 of the exit 176 with the partially erected blade 110.

In a next step S8, after having finished driving the curve 178, e.g. being on a straight lane again like on the bridge 174, the blade 110 is lowered again and attached to the dolly 130. Thus, the transport system 114 has passed the obstacle (exit of highway) and can continue is transport towards a storage site or the installation site.

Of course, the method is also applicable to passing other obstacles, like trees or houses, wherein the blade 110 is lifted to drive narrow curves.

### Reference signs

- 100: wind turbine
- 102: tower
- 104: foundation
- 106: nacelle
- 108: rotor
- 110: rotor blade
- 112: rotor hub
- 114: transport system
- 116: transport vehicle
- 118: tractor
- 120: trailer
- 122: driver's cab
- 124: blade lifting device
- 126: root end
- 128: tip end
- 130: dolly
- 132: tip support structure
- 134: front axle
- 136: rear axle
- 138: deck
- 140: spar
- 142: free space
- 144: ground
- 146: cross-section plane
- 148: overall height
- 150: side support wheels
- 152: lateral side
- 154: fold-out support wheels
- 156: arrow
- 158: heavy-duty module
- 160: rear side
- 162: ballast
- 164: guiding rail
- 166: sensor device
- 168: mounting adapter
- 170: mounting plate
- 172: highway
- 174: bridge
- 176: exit
- 178: curve

## Claims

1. Transport vehicle (116) for transporting a wind turbine rotor blade (110), comprising
- a tractor (118), in particular equipped with a driver's cab (122),
- a trailer (120) coupled with the tractor (118),
- a blade lifting device (124), which is mounted on the trailer (120) and which is configured to be mechanically connected to a root end (126) of the wind turbine rotor blade (110), wherein the blade lifting device (124) is configured to lift the wind turbine rotor blade (110) in a connected state from a lying transport position into an at least partially erected transport position.

2. Transport vehicle (116) according to claim 1, comprising a dolly (130) with a tip support structure (132).

3. Transport vehicle (116) according to any one of the preceding claims, wherein the blade lifting device (124) is configured and mounted onto the trailer (120) such that - with a wind turbine rotor blade (110) in the connected state - a height of 4.5 m, preferably 4.3 m, is not exceeded.

4. Transport vehicle (116) according to any one of the preceding claims, wherein the trailer (120) is a low-bed trailer, semi low-bed trailer or a boiler bridge trailer.

5. Transport vehicle (116) according to any one of the preceding claims, wherein the trailer (120) comprises at least one rear axle (136) and a deck (138) located between the at least one rear axle (136) and the blade lifting device (124), wherein a minimum length of the deck is 8 m, preferably 10 m.

6. Transport vehicle (116) according to any one of the preceding claims, wherein the trailer (120) comprises at least one front axle (134).

7. Transport vehicle (116) according to any one of the preceding claims, wherein the trailer (120) comprises two elongated spars (140) between which a free space (142) is formed into which the wind turbine rotor blade (110) projects at least partially in the connected state.

8. Transport vehicle (116) according to any one of the preceding claims, comprising an exchangeable mounting adapter (168), the mounting adapter (168) being connected to the blade lifting device (124), wherein the mounting adapter (168) is adapted to be connected to a rotor blade (110) having a larger or smaller diameter than a rotor blade (110) mounted directly to the blade lifting device (124).

9. Transport vehicle (116) according to any one of the preceding claims, comprising one or more of the following:
- side support wheels (150) that are detachably mounted to the trailer (120);
- a heavy-duty module (158) that is coupled to a rear side (160) of the trailer (120), the heavy-duty module (158) being configured to be detached from the rear side (160) and to be mounted to a lateral side (152) of the trailer (120) in order to provide lateral support;
- one or more fold-out support wheels (154) being mounted on the trailer (120) in such a way that the one or more fold-out support wheels (154) can be unfolded from a transport position on the trailer (120) and brought into a support position to a lateral side (152) of the trailer (120); and/or
- a ballast (162) slidingly mounted on the trailer (120) such that the ballast (1629 can be moved between two lateral sides (152) of the trailer (120).

10. Transport vehicle (116) according to any one of the preceding claims, wherein the trailer (120) comprises a sensor device (166), the sensor device (166) being configured to measure a pressure at an edge of the trailer (120).

11. Transport system (114), comprising
- a transport vehicle (116) according to any one of the preceding claims; and
- a wind turbine rotor blade (110), the wind turbine rotor blade (110) being supported by the transport vehicle (116) .

12. Method for transporting a wind turbine rotor blade (110) for a wind turbine (100), comprising the steps:
- providing a transport system (114) according to claim 11,
- transporting a wind turbine rotor blade (110) being supported on the transport vehicle (116),
- lifting the wind turbine rotor blade (110) with the blade lifting device (124),
- driving a curve (178).

13. Method according to claim 11, wherein, prior to the step of lifting, a dolly (130) is detached from the wind turbine rotor blade (110).

14. Method according to claim 12 or 13, comprising the step of driving backwards prior to the step of driving a curve (178) .

15. Method according to claim 14, wherein prior to the step of lifting, the transport vehicle (116) passes under a bridge (172), and wherein in the step of driving backwards, the transport vehicle (116) drives backwards until the lifted wind turbine rotor blade (110) is arranged above the bridge (174) .
